# EUROPEAN PATENT APPLICATION

(11) **EP 1 708 404 A1**
(43) Date of publication of application: **04.10.2006**
(21) Application number: 06003468.3
(22) Date of filing: 21.02.2006
(51) Int. Cl.: H04L 1/18

(54) **Method and apparatus for error recovery performed at the access node of a core network**

(30) Priority: 01.04.2005 US 667358 P; 18.11.2005 US 282355
(71) Applicant: Alcatel, 75008 Paris (FR)
(72) Inventor: Sharpe, Randall B., Chapel Hill, NC 27516 (US); Crosby, Ben, Southbank, VIC 3006 (AU)
(74) Representative: Dreiss, Fuhlendorf, Steimle & Becker

(57) **Abstract**

A method is provided for facilitating error recovery of media stream packets in an access node. The method comprises storing a plurality of data transmission units of a media stream in a buffer of an access node, receiving a request for retransmission of at least one designated data transmission unit for reception by a designated subscriber media decoder apparatus, accessing the at least one designated data transmission unit within the buffer in response to receiving the request for retransmission and transmitting the at least one designated data transmission unit from the access node for reception by the designated subscriber media decoder apparatus in response to successfully accessing the at least one designated data transmission unit.

## Description

### FIELD OF THE DISCLOSURE

The disclosures made herein relate generally to computer networks and, more particularly, to error recovery mechanisms in computer networks.

### BACKGROUND

Streaming video is one example of streaming media and is very sensitive to packet loss. One reason for such sensitivity is that loss of as few as one packet of video stream information generally results in a visible artifact, which may persist for a second or more. Therefore, a mechanism to recover lost packets is desirable, if not necessary, for a high quality video delivery service.

Data networks commonly use Transmission Control Protocol (TCP) when reliable data transport is required. When packet losses occur, TCP provides a retransmission mechanism that includes a back-off mechanism to prevent network instability. The back-off mechanism performs the function of reducing transmission rate of data streams sharing a communication link when that communication link becomes congested and suffers a prescribed number of errors (e.g., one or more lost packets). With respect to high-quality video delivery service, TCP has the shortcoming of not being useful because a video stream typically cannot be slowed to a rate suitable to TCP without significantly degrading video quality.

User Datagram Protocol (UDP) is commonly used for streaming video. But, UDP has the shortcoming of being unreliable due at least in part to it providing no guarantees for delivery, no protection from duplication and/or no mechanism for error correction.

Various transport mechanisms that are known to be reliable are suitable for being provided between the origin of a video stream and a decoder. But, these known-reliable transport mechanisms have the drawback of offering less than desirable scalability. When a stream is being multicast to many thousands of decoders, a single packet loss often results in many thousands of packet retransmissions. This retransmission generates a heavy traffic load across a wide network, which often times results in congestion, more packet loss and potential network instability.

Therefore, an error recovery mechanism that at least partially overcomes shortcomings associated with conventional error recovery mechanisms and network communication protocols is useful and advantageous.

### SUMMARY OF THE DISCLOSURE

Embodiments of the present invention provide a mechanism for facilitating error recovery of media stream packets in an access node. Integration of an error recovery mechanism in the access node confines lost packet retransmission to within the access network, reduces media stream traffic traversing core and aggregation networks and reduces the risk of network instability. These resulting benefits are particularly valuable for a DSL access network due to the greater susceptibility to bit errors and therefore packet loss on the DSL line compared to the rest of the network. Accordingly, embodiments of the present invention advantageously overcome one or more shortcomings associated with conventional error recovery mechanisms and network communication protocols.

In one embodiment of the present invention, a method is provided for facilitating error recovery of media stream packets in an access node. The method comprises storing a plurality of data transmission units of a video stream in a buffer of an access node, receiving a request for retransmission of at least one designated data transmission unit for reception by a designated subscriber media decoder apparatus, accessing the at least one designated data transmission unit within the buffer in response to receiving the request for retransmission and transmitting the at least one designated data transmission unit from the access node for reception by the designated subscriber media decoder apparatus in response to successfully accessing the at least one designated data transmission unit.

In another embodiment of the present invention, a method is provided for facilitating error recovery of media stream packets in an access node. The method includes assessing completeness of media stream information accessible within media stream decoder apparatus, requesting retransmission of a required portion of the media stream information for reception by the media stream decoder apparatus in response to the assessing having determined that the required portion of the media stream information is not accessible from within the media stream decoder apparatus and receiving the required portion of the media stream information from an access node after the requesting retransmission is performed and in response to successfully accessing the required portion of the media stream information from within a buffer of the access node.

In another embodiment of the present invention, an access node comprises at least one data processing device, a buffer connected to the at least one data processing device, memory connected to the at least one data processing device and instructions accessible from the memory and processable by the at least one data processing device. The instructions are configured for enabling the at least one data processing device to facilitate storing a plurality of data transmission units of a media stream in the buffer, receiving a request for retransmission of at least one designated data transmission unit for reception by a designated subscriber media decoder apparatus, accessing the at least one designated data transmission unit within the buffer in response to receiving the request for retransmission and transmitting the at least one designated data transmission unit for reception by the designated subscriber media decoder apparatus in response to successfully accessing the at least one designated data transmission unit.

Turning now to specific aspects of the present invention, in at least one embodiment, the method includes storing video stream information in a buffer of an access node.

In at least one embodiment of the present invention, assessing or determining media stream information (e.g., packets) includes analyzing identifier information portions of video stream information stored in a buffer for identifying identifier information of a required portion of the video stream information.

In at least one embodiment of the present invention, requesting retransmission includes preparing a retransmission request and sending the retransmission request for enabling retransmission functionality by an access node.

In at least one embodiment of the present invention, the request for retransmitting designates identifier information of the at least one data transmission unit and accessing the at least one designated data transmission unit in the buffer includes searching for the identifier information of the at least one data transmission unit.

In at least one embodiment of the present invention, a request for retransmission is transmitted from the designated subscriber media decoder apparatus for reception by the access node in response to determining that at least one designated data transmission unit is not accessible from within the designated subscriber media decoder apparatus.
These and other objects, embodiments, advantages and/or distinctions of the present invention will become readily apparent upon further review of the following specification, associated drawings and appended claims.

### BRIEF DESCRIPTION OF THE DRAWINGS

FIG. 1 depicts an embodiment of a method for facilitating error recovery of media stream data transmission units via an access node in accordance with the present invention.
FIG. 2 depicts an embodiment of an access node configured for facilitating error recovery of media stream data transmission units in accordance with the present invention.

### DETAILED DESCRIPTION OF THE DRAWING FIGURES

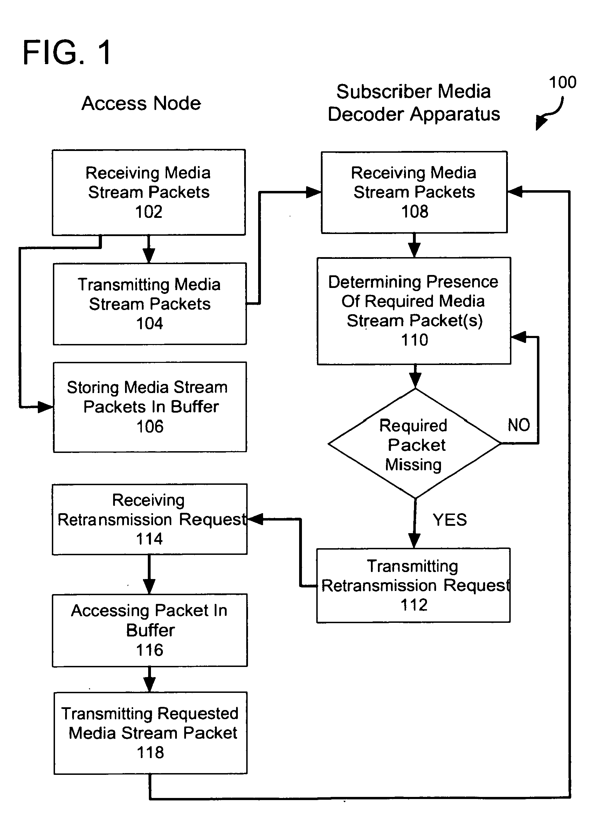

FIG. 1 depicts an embodiment of a method in accordance with the present invention, which is referred to herein as the method 100. The method 100 provides for facilitating error recovery of media stream packets via an access node. In doing so, the method 100 advantageously confines lost packet transmission to within the access network, reduces media stream traffic traversing core and aggregation networks and reduces the risk of network instability.

The method 100 begins with an operation 102 being performed by an access node for receiving media stream packets (i.e., packets). After receiving the media stream packets, the access node performs an operation 104 for transmitting the packets for reception by a subscriber media decoder apparatus (i.e., a decoder) and performs an operation 106 for storing the packets in a buffer of the access node. The packets may be received, transmitted and received as a group or in a sequential manner. The packets are a preferred implementation of a data transmission unit in accordance with the present invention. Other examples of such data transmission units include, but are not limited to, frames and cells. A data transmission unit is an embodiment of media stream information in accordance with the present invention.

In one embodiment, storage of packets corresponding to the most recent several seconds of the media stream in the buffer is sufficient for enabling error recovery functionality in accordance with the present invention. In this manner, the buffer is of sufficient size to allow enough time for a decoder to determine that one or more intended packets of the group of packets has been lost during transmission (i.e., at any point prior to being stored in the buffer), to request retransmission, and to allow a data processing device of the access node respond to the request for retransmission (i.e., transmit requested packet or packets). A buffer in accordance with the present invention can functionally be thought of as a delay line or a circular buffer. A delay line provides the functionality of introducing a calculated delay into the transmission of a signal. A circular buffer provides the functionality of holding data written by one process and read by another. In such cases, separate read and write pointers are used that are not allowed to cross each other so that unread data cannot be overwritten by new data. When the circular buffer is filled, new data is written starting at the beginning of the buffer.

Next, the decoder performs an operation 108 for receiving the packets and, subsequently, performs an operation 110 for determining presence of required packets (i.e., required portions of media stream information). It is disclosed herein that the decoder may facilitate such determination through any number of approaches. Preferably, the decoder is configured for assessing identifier information of each one of the packets. Each packet includes a unique sequence identifier thereby allowing the decoder to determine which packet is lost. It is disclosed herein that a threshold level may be set so that, for a given packet size (e.g., average packet size), a certain number of consecutive packets must be lost (i.e., missing so as to not be accessible from within the decoder) prior to the decoder determining that a required portion of media stream information has been lost (e.g., filed to be received by the decoder). Accordingly, the decoder assesses identifier information of each one of a plurality of packets to determine whether one of the intended packets in the group of packets is missing.

Still referring to FIG. 1, in response to the decoder determining that a required packet is missing, the decoder performs an operation 112 for transmitting a request for retransmitting the required packet for reception by the access node (i.e., a nearby access node) It is disclosed herein that the required packet may be individually required or a packet within a group of packets that has been determined to be required. In one embodiment, the operation 112 for requesting retransmission of the required packet includes preparing a retransmission request and sending the retransmission request for reception by the access node. Typically, but not necessarily, the request is transmitted for reception by the same access node that previously sent packets related to the required packet.

There are known and suitable mechanisms for facilitating such a request for retransmission. One example of such a mechanism is an Automatic Repeat Request (ARQ) scheme. ARQ's are often used in traditional data communication networks. An ARQ is an error control protocol for data transmission in which the receiver detects transmission errors in a message and automatically requests a retransmission from the transmitter via a message referred to as an ARQ. Usually, when the transmitter receives the ARQ, the transmitter retransmits the message until it is either correctly received or the error persists beyond a predetermined number of retransmissions.

To limit perpetual requests for retransmission, the access node and/or the decoder may be configured for enabling only a specified number (i.e., a limit) of retransmission requests for a given required packet to be carried out. In response to being at or under this limit, the request for retransmission is carried out. In response to being over this limit, the request for retransmission is not carried out and subsequent requests for retransmission for the same required packet are precluded.

After the decoder performs the operation 112 for transmitting the request for retransmitting the required packet, the access node performs an operation 114 for receiving the request for retransmission. Thereafter, the access node performs an operation 116 for accessing the required packet from within the buffer and, in response to successfully accessing the required packet from within the buffer, performs an operation 118 for transmitting the required packet for reception by the decoder. In one embodiment, accessing the required packet from within the buffer includes searching for identifier information known to correspond to the required packet (e.g., a sequence number of the required packet).

Returning now to the operation 110 for determining the presence of required packets, the decoder takes a different course of action in response to the decoder determining that a required packet is not missing. In response to the decoder determining that a required packet is not missing, the decoder continues with such determination for so long as packets are supplied to that operation.

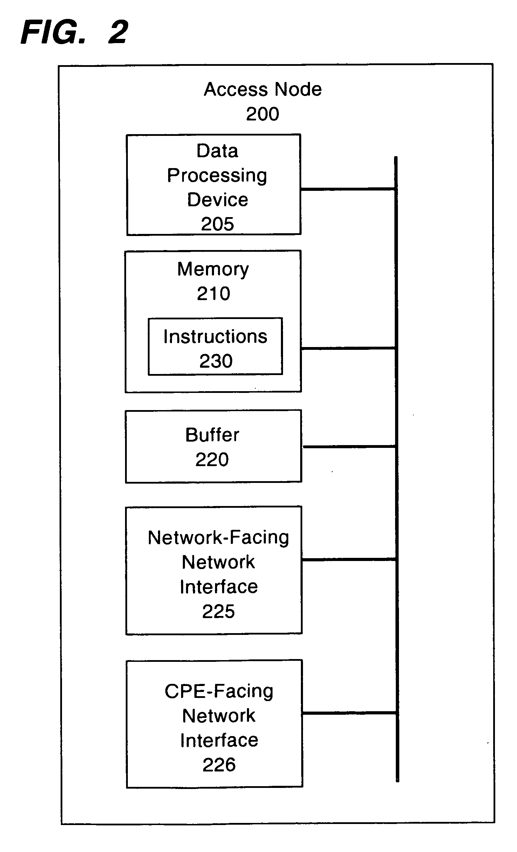

FIG. 2 depicts an embodiment of an access node in accordance with the present invention, which is referred to herein as the access node 200. As will be discussed in greater detail below, the access node 200 is configured for carrying out error recovery functionality in accordance with the present invention. For example, the access node 200 is suitably configured for enabling the method 100 discussed above in reference to FIG. 1 to be carried out.

The access network node 200 includes a data processing device 205, memory 210, a buffer 220, a network-facing network interface 225 and a CPE (customer premise equipment) facing network interface 226. The data processing device 205, the memory 210, the buffer 220, the network-facing network interface 225 and the CPE-facing network interface 226 are interconnected for enabling interaction therebetween. The network-facing network interface 225 receives media stream packets from an upstream source and the CPE-facing network interface 226 forwards media stream packets for reception by downstream customer premise equipment.

Residing in the memory 210 is instructions 230 for, among other functionality, carrying out error recovery functionality in accordance with the present invention. The instructions 230 are accessible from within the memory 210 and are processable by the data processing device 205. The instructions 230 are configured for enabling the data processing device 205 to facilitate the operations of storing a plurality of packets of a media stream in the buffer, receiving a request for retransmission of at least one designated packet for reception by a designated subscriber media decoder apparatus, accessing the at least one designated packet within the buffer in response to receiving the request for retransmission and transmitting the at least one designated packet from the access node for reception by the designated subscriber media decoder apparatus in response to successfully accessing the at least one designated packet.

It is disclosed herein that the present invention may include optional functionality. In one embodiment of such optional functionality, streaming media packets have Forward Error Correction (FEC) packets associated herewith. The media and FEC packets are sent to the access node but only the streaming media packets are forwarded to subscriber media decoder apparatuses (e.g., set top boxes). The buffer of the access node stores the FEC packets instead of the media packets. When a subscriber media decoder apparatus determines that one or more required packets have been lost, the subscriber media decoder apparatus has the ability to request the number of FEC packets necessary to recover the lost media packet(s). This FEC packet functionality reduces the storage requirements in the access node. In this manner, a FEC packet is an embodiment of a data transmission unit of a media stream in accordance with the present invention and is an embodiment of media stream information in accordance with the present invention.

The following method as well as the following features, separately or in any combination, may also constitute advantageous embodiments of the described or claimed invention:
- A method, comprising: assessing completeness of media stream information accessible within media stream decoder apparatus; requesting retransmission of a required portion of said media stream information for reception by the media stream decoder apparatus in response to said assessing having determined that the required portion of said media stream information is not accessible from within the media stream decoder apparatus; and receiving the required portion of said media stream information from an access node after said requesting retransmission is performed and in response to successfully accessing the required portion of said media stream information from within a buffer of the access node;
- The claimed and/or described method, further comprising: storing said media stream information in the buffer; and providing said media stream information to said media stream decoder apparatus, wherein said storing and said providing are both performed prior to said assessing;
- The claimed and/or described method wherein said assessing includes analyzing identifier information portions of said media stream information for identifying identifier information of the required portion of said media stream information;
- The claimed and/or described method wherein said requesting retransmission includes preparing a retransmission request and sending the retransmission request for reception by the access node;
- The claimed and/or described method wherein said preparing includes designating at least one of identifier information designating the required portion of said media stream information and identifier information designating all of said media stream information;
- The claimed and/or described method wherein said assessing includes analyzing identifier information portions of said media stream information for identifying identifier information of the required portion of said media stream information;
- The claimed and/or described method, further comprising: storing said media stream information in the buffer; and providing said media stream information to said media stream decoder apparatus, wherein said storing and said providing are both performed prior to said assessing;
- The claimed and/or described access node wherein transmitting the request for retransmission includes preparing a retransmission request that designates at least one of identifier information designating said at least one data transmission unit and identifier information designating a group of data transmission units comprising said at least one designated data transmission unit;
- The claimed and/or described access node wherein: the request for retransmitting designates identifier information of said at least one data transmission unit; and accessing said at least one designated data transmission unit in the buffer includes searching for said identifier information of said at least one data transmission unit.

In the preceding detailed description, reference has been made to the accompanying drawings that form a part hereof, and in which are shown by way of illustration specific embodiments in which the present invention may be practiced. These embodiments, and certain variants thereof, have been described in sufficient detail to enable those skilled in the art to practice embodiments of the present invention. It is to be understood that other suitable embodiments may be utilized and that logical, mechanical, chemical and electrical changes may be made without departing from the spirit or scope of such inventive disclosures. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A method, comprising:
storing a plurality of data transmission units of a media stream in a buffer of an access node;
receiving a request for retransmission of at least one designated data transmission unit for reception by a designated subscriber media decoder apparatus; accessing said at least one designated data transmission unit within the buffer in response to receiving the request for retransmission; and
transmitting said at least one designated data transmission unit from the access node for reception by the designated subscriber media decoder apparatus in response to successfully accessing said at least one designated data transmission unit.

2. The method of claim 1 wherein:
the request for retransmitting designates identifier information of said at least one data transmission unit; and
accessing said at least one designated data transmission unit in the buffer includes searching for said identifier information of said at least one data transmission unit.

3. The method of claim 1, further comprising:
transmitting the request for retransmission from the designated subscriber media decoder apparatus for reception by the access node in response to determining that said at least one designated data transmission unit is not accessible from within the designated subscriber media decoder apparatus.

4. The method of claim 3 wherein said determining includes analyzing identifier information of data transmission units received by the designated subscriber media decoder apparatus for identifying identifier information of said at least one designated data transmission unit.

5. The method of claim 3 wherein transmitting the request for retransmission includes preparing a retransmission request that designates at least one of identifier information designating said at least one data transmission unit and identifier information designating a group of data transmission units comprising said at least one designated data transmission unit.

6. The method of claim 3 wherein:
the request for retransmitting designates identifier information of said at least one data transmission unit; and
accessing said at least one designated data transmission unit in the buffer includes searching for said identifier information of said at least one data transmission unit.

7. An access node, comprising:
at least one data processing device;
a buffer connected to said at least one data processing device;
memory connected to said at least one data processing device; and
instructions accessible from said memory and
processable by said at least one data processing device, wherein said instructions are configured for enabling said at least one data processing device to facilitate:
storing a plurality of data transmission units of a media stream in the buffer;
receiving a request for retransmission of at least one designated data transmission unit for reception by a designated subscriber media decoder apparatus; accessing said at least one designated data transmission unit within the buffer in response to receiving the request for retransmission; and
transmitting said at least one designated data transmission unit for reception by the designated subscriber media decoder apparatus in response to successfully accessing said at least one designated data transmission unit.

8. The access node of claim 7 wherein:
the request for retransmitting designates identifier information of said at least one data transmission unit; and
accessing said at least one designated data transmission unit in the buffer includes searching for said identifier information of said at least one data transmission unit.

9. The access node of claim 7, further comprising:
transmitting the request for retransmission from the designated subscriber media decoder apparatus for reception by the access node in response to determining that said at least one designated data transmission unit is not accessible from within the designated subscriber media decoder apparatus.

10. The access node of claim 9 wherein said determining includes analyzing identifier information of data transmission units received by the designated subscriber media decoder apparatus for identifying identifier information of said at least one designated data transmission unit.
